(19) Europäisches Patentamt

European Patent Office

Office européen des brevets

(11) Veröffentlichungsnummer: **0 369 312 B1**

(12) # EUROPÄISCHE PATENTSCHRIFT

(45) Veröffentlichungstag der Patentschrift: **29.12.93**

(21) Anmeldenummer: **89120693.0**

(22) Anmeldetag: **08.11.89**

Teilanmeldung 92122004.2 eingereicht am 08/11/89.

Die Akte enthält technische Angaben, die nach dem Eingang der Anmeldung eingereicht wurden und die nicht in dieser Patentschrift enthalten sind.

(51) Int. Cl.⁵: **C08K 5/20**, C08L 77/00, C08L 101/00, //(C08L77/00, 101:00),(C08L101/06,77:00)

(54) **Thermoplastischer faserverstärkter Verbundwerkstoff mit einem Gehalt an Polyamiden.**

(30) Priorität: **15.11.88 AT 2790/88**

(43) Veröffentlichungstag der Anmeldung: **23.05.90 Patentblatt 90/21**

(45) Bekanntmachung des Hinweises auf die Patenterteilung: **29.12.93 Patentblatt 93/52**

(84) Benannte Vertragsstaaten: **AT BE CH DE ES FR GB GR IT LI LU NL SE**

(56) Entgegenhaltungen: **WO-A-85/05372** **WO-A-88/02763**

(73) Patentinhaber: **PCD Polymere Gesellschaft m.b.H.** **Danubiastrasse 21-25** **A-2323 Schwechat-Mannswörth(AT)**

(72) Erfinder: **Horacek, Heinz, Dr.** **Bockgasse 43** **A-4020 Linz(AT)**

(74) Vertreter: **Kunz, Ekkehard, Dr.** **Chemie Linz Ges.m.b.H.** **Abteilung Patente** **St. Peter-Str. 25** **A-4021 Linz (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft thermoplastische faserverstärkte Verbundwerkstoffe, die durch Imprägnieren von Verstärkungsfasern mit einer Schmelze, die aus einer Mischung von Thermoplasten, Polyamiden, niedermolekularen gesättigten Carbonsäureamiden und gegebenenfalls einem Haftvermittler erhalten wird, erhältlich sind, ein Verfahren zur Herstellung dieser Verbundwerkstoffe sowie ihre Verwendung.

Faserverstärkte thermoplastische Kunststoffe stellen wertvolle Konstruktionswerkstoffe vor allem im Maschinen- und Apparatebau dar. Derartige Kunststoffe sind beispielsweise aus der DE-PS 29 48 235 bekannt. Ein Nachteil dieser Kunststoffe liegt jedoch darin, daß vor allem in anspruchsvolleren Anwendungsbereichen ihre mechanischen Eigenschaften, insbesondere Festigkeit und Modul, nicht mehr ausreichen. Ein weiterer Nachteil liegt in ihrer teilweise schwierigen Verarbeitung, insbesondere bei Thermoplasten mit höherer Temperaturbeständigkeit, die sich vor allem in der schwierigen Imprägnierung der Verstärkungsfasern, beispielsweise von Glasfasermatten, mit diesen hochtemperaturbeständigen Thermoplastschmelzen zeigt. Aus der US 3 379 792, der EP-A 221 341 und der EP-A 225 170 sind unverstärkte Formmassen auf Basis von Polyphenylenethern bekannt, bei denen die Fließeigenschaften durch Zusatz von Polyamiden verbessert, gleichzeitig allerdings die mechanischen Eigenschaften verschlechtert werden.

Eine Verbesserung der Schlagzähigkeit von Polyamid-Polyphenylenethergemischen wird gemäß EP-A-0 234 060 durch Zugabe von Estern aus drei- bis sechswertigen Alkoholen und aliphatischen Carbonsäuren erzielt. Zur Verbesserung der Kompatibilität der Polymerphasen kann diese Mischung zusätzlich flüssige Dien-Polymere, Epoxide, ungesättigte Carbonsäuren bzw. deren Derivate, aliphatische Polycarbonsäuren, Silane, funktionalisierte Polyphenylenether, oxidierte Polyolefinwachse, Copolymere von Dicarbonsäuren und vinylaromatischen Verbindungen enthalten. Ebenfalls zur Verbesserung der Kompatibilität und Stabilisierung der Phasen werden dem Polyamid-Polyphenylenethergemisch gemäß EP-A-0 270 247 oberflächenaktive Stoffe, Seilen, modifizierte Kautschuke oder Epoxide zugesetzt, wobei Kautschuke, Epoxide und ungesättigte Carbonsäuren bzw. deren Derivate bevorzugt sind. In den Beispielen wird ein mit Maleinsäureanhydrid gepfropfter Ethylen-Propylenkautschuk verwendet. Weiters werden in der WO 85/05372 thermoplastiche, faserverstärkte Verbundwerkstoffe beschrieben, die aus einer Mischung von Polyphenylenether, Polyamid, Glasfasesm und einer Polycarbonsäure bzw. deren Ester- oder N-substituierten Amidderivaten hergestellt sind.

Die Aufgabe der vorliegenden Erfindung war es, faserverstärkte Thermoplaste mit verbesserten mechanischen Eigenschaften und guter Verarbeitbarkeit zu finden.

Überraschenderweise wurde gefunden, daß derartige Verbundwerkstoffe mit guten mechanischen Eigenschaften sowie mit guter Verarbeitbarkeit erhalten werden, wenn man die Verstärkungsfasern mit einer Schmelze imprägniert, die aus einer Mischung von Thermoplasten mit Polyamiden und niedermolekularen gesättigten Carbonsäureamiden erhalten wird.

Gegenstand der Erfindung ist demnach ein thermoplastischer faserverstärkter Verbundwerkstoff, der durch Imprägnieren von Verstärkungsfasern mit der Schmelze einer Mischung, die 10 bis 90 Gew.Teile Thermoplast, 90 bis 10 Gew.Teile Polyamid und gegebenenfalls 1 bis 10 Gew. Teile Haftvermittler enthält, erhältlich ist, wobei die Mischung zusätzlich 0,1 bis 10 Gew.%, bezogen auf die Menge des Polyamids, eines aliphatischen, gesättigten Dicarbonsäurediamids mit 3 bis 10 C-Atomen enthält.

Als Thermoplaste können sämtliche für die Herstellung von faserverstärkten Kunststoffen verwendbaren Thermoplaste eingesetzt werden, beispielsweise solche, wie sie in der DE-PS 29 48 235 angeführt sind. Mögliche Thermoplaste sind z. B. Polyolefine, Polyamide, Polyimide, Polysulfone, Polyacetale, Polycarbonate, Polystyrol, Acrylharze, Polyester, Polyetherimide, Polyethersulfone, Polyetherketone, Polyetheretherketone, Polyphenylenether, Polyphenylensulfid und Polytetrafluorethylen, sowie Mischungen aus diesen Thermoplasten.

Als Polyamide eignen sich beispielsweise solche, wie sie in der EP-A 221 341 oder EP-A 225 170 angeführt sind, bevorzugt werden Polyamid 6 oder Polyamid 6,6 eingesetzt. Weitere Beispiele für Polyamide (PA) sind Poly-4-aminobuttersäure (PA 4), Poly-7-aminoheptansäure (PA 7), Poly-8-aminooctansäure (PA 8), Poly-10-aminodecansäure (PA 10), Poly-11-aminoundecansäure (PA 11), Poly-12-aminododecansäure (PA 12), Polyheptamethylenpimelamid (PA 7,7), Polyoctamethylensuberamid (PA 8,8), Polyhexamethylensebacamid (PA 6,10), Polynonamethylenacelamid (PA 9,9), Polydecamethylenacelamid (PA 10,9), Polydecamethylensebacamid (PA 10,10), Polybis(4-aminocyclohexyl)methan 1,10 decandicarboxamid, Poly(m-Xylylenadipamid), Poly(p-Xylylensebacamid), Polypiperazinsebacamid. Es ist auch möglich, Mischungen von Polyamiden einzusetzen.

Als aliphatische, gesättigte Dicarbonsäurediamide können Sebacinsäurediamid, Bernsteinsäurediamid, Adipinsäurediamid, Malonsäurediamid, Pimelinsäurediamid, Glutarsäurediamid, Korksäurediamid und Azelainsäurediamid verwendet werden. Bevorzugt sind Dicarbonsäurediamide mit 4 bis 6 C-Atomen im Molekül.

Auch die Verwendung von Mischungen verschiedener Säureamide ist möglich.

Der Zusatz des Säureamids bewirkt eine etwa der Menge des zugesetzten Säureamdis proportionale Reduktion der Schmelzviskosität, wodurch eine bessere Imprägnierung ermöglicht, und damit verbesserte mechanische Eigenschaften der Verbunde erhalten werden. Die Polymermischung zur Imprägnierung der Verstärkungsfasern enthält bevorzugt 0,5 bis 5 % Säureamid, bezogen auf die Menge des Polyamids.

Die gegebenenfalls zugesetzten Haftvermittler können bei verschiedenen Polyamid-Thermoplast-Mischungen eine weitere Verbesserung der mechanischen Eigenschaften bewirken. Als Haftvermittler eignen sich beispielsweise Blockcopolymere aus Polyamid und dem betreffenden Thermoplasten, oder Polyolefine mit funktionellen Gruppen, wie z. B. Carboxyl- oder Hydroxylgruppen. Die Herstellung derartiger Blockcopolymerer ist beispielsweise gemäß J. Pol. Sci., Pol. Chem. Ed. 17 (1979) S. 2317 - 2335 durch Umsetzung von Aminoendgruppen enthaltenden Polyamidblöcken mit Hydroxyl-oder Thiolendgruppen enthaltenden Polyphenylenether- oder Polyphenylensulfidblöcken und Hexamethylendiisocyanat möglich. Derartige Blockcopolymere sind auch im Handel erhältlich, beispielsweise Pebax[R] von Atochem, ein Polyamid-Polyether-Blockcopolymer. Das im Handel erhältliche Bynel[R] CXA 3101 von Du Pont ist ein Copolymer von Ethylen mit Carboxyl-oder Hydroxylgruppen enthaltenden Monomeren.

Die Mischung zur Imprägnierung der Verstärkungsfasern enthält bevorzugt 40 bis 60 Gew.Teile Thermoplast und 60 bis 40 Gewichtsteile Polyamid.

Bevorzugt sind Verbundwerkstoffe mit einer Wärmeformbeständigkeit von über 145°C, gemessen mit der Vicatnadel gemäß DIN 53460.

Weiters bevorzugt sind Verbundwerkstoffe, die durch Imprägnieren der Verstärkungsfasern durch Heißpressen bei Temperaturen von 10 bis 200°C über dem Schmelzpunkt der Schmelze und bei Drücken von 1,2 bis 40 bar erhältlich sind.

Als Verstärkungsfasern eignen sich alle bekannten für verstärkte Kunststoffe verwendbaren Fasern, wie z. B. Fasern aus Glas, Kohle, Aramid, Keramik, Metall oder Mischungen derselben. Unter Fasern sind sowohl Schnittfasern als auch Endlosfasern, beispielsweise in Form von unidirektionalen Rovings zu verstehen, sowie auch Gewebe und Fasermatten, die ebenfalls aus Schnittfasern oder Endlosfasern bestehen können. Der fertige Verbund besitzt üblicherweise einen Gehalt an Verstärkungsfasern von etwa 15 bis 60 Vol.%.

Ein weiterer Gegenstand der Erfindung ist die Herstellung der erfindungsgemäßen Verbundwerkstoffe. Sie erfolgt durch Aufschmelzen einer Mischung aus 10 bis 90 Gew.Teilen eines oder mehrerer Thermoplaste und 90 bis 10 Gew.Teilen eines oder mehrerer Polyamide und gegebenenfalls 1 bis 10 Gew. Teilen Haftvermittler, wobei diese Mischung 0,1 bis 10 Gew.%, bezogen auf die Menge des Polyamids, eines aliphatischen, gesättigten Dicarbonsäurediamids mit 3 bis 10 C-Atomen enthält. Mit dieser Schmelze werden bei Temperaturen, die 10 bis 200°C über dem Schmelzpunkt der Schmelze liegen, die Verstärkungsfasern imprägniert.

Fasermatten, Gewebe oder Rovings aus Endlosfasern können beispielsweise mittels Pultrusion imprägniert werden. Im Falle von Rovings können dabei entweder einzelne Rovingstränge oder mehrere zu einem Band nebeneinandergelegte Rovingstränge durch die Schmelze gezogen und nach Kalibrierung anschließend zur Verfestigung abgekühlt werden.

In einem bevorzugten Verfahren erfolgt die Imprägnierung der Verstärkungsfasern durch gemeinsames Verpressen mit der Schmelze in einer Heißpresse bei Temperaturen von 10 bis 200°C über dem Schmelzpunkt der Schmelze und bei Drücken von 1,2 bis 40 bar. Besonders bevorzugt verwendet man dabei eine kontinuierliche Presse, der die Mischung von Thermoplasten, Polyamiden, Säureamiden und gegebenenfalls Haftvermittler entweder in Form eines vorgefertigten Filmes oder als frisch extrudierte Schmelze gemeinsam mit einer oder mehreren Fasermatten, Geweben oder unidirektionalen Rovingsträngen zugeführt werden. Nach der Imprägnierung in der heißen Laminierzone der Presse erfolgt in einer anschließenden Kühlzone die Abkühlung und Verfestigung des Verbundes ebenfalls unter Druck.

Es ist auch möglich, Schnittfasern mit der pulverförmigen, das Säureamid enthaltenden Polymermischung zu vermischen, anschließend in einem Extruder aufzuschmelzen und als Strang zu extrudieren. Rovingstränge aus Endlosfasern können in einem Extrusionswerkzeug, dem gleichzeitig Schmelze und Rovings zugeführt werden, als faserverstärkter Polymerstrang extrudiert werden.

Die faserverstärkten Polymerstränge können nach Abkühlung zu Granulaten geschnitten werden, die beispielsweise durch Spritzgießen oder Extrusion zu Fertigteilen weiterverarbeitet werden können. Die in Form von Bahnen oder Platten vorliegenden Verbundwerkstoffe können als Ausgangsmaterial zur Herstellung von Formteilen durch Heißpressen verwendet werden. Die auf etwa 10 bis 200°C über den Schmelzpunkt der verwendeten Polymermischung erwärmten Bahnen oder Platten werden dabei in beheizte Formen eingelegt und bei Temperaturen von etwa 50 bis 120°C und Drücken von 1 bis 100 bar verpreßt.

Vergleichsbeispiel V1:

Eine Mischung aus 45 Gew.% Polyphenylensulfid (PPS) entsprechend Ryton[R]V1 von Phillips, 45 Gew.% Polyamid 6 (PA6), entsprechend Ultramid[R] B4 von BASF und 10 Gew. % eines gemäß J. Pol. Sci., Pol. Chem. Ed. 17 (1979) S. 2317 -2335 hergestellten Polyamid- Polyphenylensulfid-Blockcopolymeren als Haftvermittler, wurde in einem Extruder bei 290°C aufgeschmolzen, über eine Breitschlitzdüse als 1,3 m breiter Film mit einem Flächengewicht von 3000 g/m$^2$ extrudiert und einer Doppelbandpresse mit 5 m/min Geschwindigkeit zugeführt. Gleichzeitig wurden der Doppelbandpresse ober- und unterhalb des Schmelzefilmes je eine vernadelte Glasmatte aus Schnittfasern mit einem Flächengewicht von je 650 g/m$^2$ (Syncomat, Fa. Syncoglas, Belgien) zugeführt. Bei einer Temperatur von 250°C in der Heizzone und 80°C in der Kühlzone, sowie einem Linienpreßdruck von 5 bar wurde eine 3 mm dicke, 1,3 m breite, glasfaserverstärkte Bahn mit einem Glasgehalt von 30 Gew.% und einem Flächengewicht von 4300 g/m$^2$ erhalten.

Der Schmelzindex (MFI) der Polymermischung (gemessen nach der Extrusion gemäß DIN 53735 in g/10 min bei 290°C und 5 kg Belastung, Düsendurchmesser 2,2 mm) sowie Zugfestigkeit (DIN 53455), Dehnung (DIN 53455), Schlagzähigkeit (DIN 53453), Biege-Elastizitätsmodul (DIN 53457), Wärmeformbeständigkeit (DIN 53460) und Wasseraufnahme (DIN 16913, 48 h) des fertigen Verbundes sind in Tabelle 1 zusammengestellt.

Beispiel 2

Analog zu Beispiel V1 wurde eine glasfaserverstärkte Bahn aus Polyphenylensulfid, Polyamid und Haftvermittler erhalten, mit dem Unterschied, daß der Polymermischung vor der Extrusion 2 Gew.% Bernsteinsäurediamid (BA), bezogen auf die Menge des Polyamids, zugemischt wurde. Der Schmelzindex (290°C, 5 kg)nach der Extrusion, sowie die mechanischen und thermischen Eigenschaften sind in Tabelle 1 zusammengestellt.

Vergleichsbeispiel V3

Eine Mischung aus 50 Gew.% Polyetherimid (PEI) entsprechend Ultem 1000 von General Electric, und 50 Gew.% Polyamid 6 (PA6), entsprechend Ultramid B 4 von BASF, wurde aus einem Extruder mit Breitschlitzdüse bei 290°C extrudiert. Der Schmelzefilm wurde auf einer Doppelbandpresse bei 250°C und 5 bar kontinuierlich mit 2 Glasmatten (Syncomat, je 650 g/m$^2$) verpreßt. Nach dem Austrag aus der Kühlzone erhielt man eine glasfaserverstärkte Bahn von 3,2 mm Dicke, einem Flächengewicht von 4300 g/m$^2$ und einem Glasgehalt von 30 Gew.%. Der Schmelzindex (280°C, 5 kg) der Mischung und die Eigenschaften des Verbundes sind in Tabelle 1 zusammengestellt.

Beispiel 4

Analog zu Beispiel V 3 wurden glasfaserverstärkte Verbundbahnen aus Polyetherimid und Polyamid hergestellt, wobei jedoch vor der Extrusion 2 Gew.% Bernsteinsäurediamid (BA), bezogen auf die Menge des Polyamids, zugesetzt wurden. Der Schmelzindex (280°C, 5 kg) nach der Extrusion sowie die Eigenschaften der Verbunde sind in Tabelle 1 zusammengestellt.

Vergleichsbeispiel V5

Eine Mischung aus 45 Gew.% Polycarbonat (PC), entsprechend Lexan[R] von General Electric, 45 Gew.% Polyamid 6, entsprechend Ultramid B 4 von BASF, und 10 Gew. % Bynel[R] CXA 3101, einem Ethylen-Copolymeren von Du Pont als Haftvermitteler, wurde aus einem Extruder mit Breitschlitzdüse bei 290°C extrudiert. Der Schmelzefilm wurde auf einer Doppelbandpresse bei 250°C und 5 bar kontinuierlich mit 2 Glasmatten (Syncomat, je 650 g/m$^2$) verpreßt. Nach dem Austrag aus der Kühlzone erhielt man eine glasfaserverstärkte Bahn von 3,2 mm Dicke, einem Flächengewicht von 4300 g/m$^2$ und einem Glasgehalt von 30 Gew.%. Der Schmelzindex (280°C, 5 kg) der Mischung und die Eigenschaften des Verbundes sind in Tabelle 1 zusammengestellt.

Beispiel 6

Analog zu Beispiel V 5 wurden glasfaserverstärkte Verbundbahnen aus Polycarbonat, Polyamid und Haftvermittler hergestellt, wobei jedoch vor der Extrusion 2 Gew.% Bernsteinsäurediamid (BA), bezogen auf die Menge des Polyamids, zugesetzt wurden. Der Schmelzindex (280°C, 5kg) nach der Extrusion sowie die Eigenschaften der Verbunde sind in Tabelle 1 zusammengestellt.

Vergleichsbeispiel V7

Eine Mischung aus 45 Gew.% Polyphenylensulfid (PPS), entsprechend Ryton[R] V1 von Phillips, 45 Gew.% eines aromatischen Polyamids (Polyxylylenadipamid), entsprechend Ixef C60 von Solvay und 10 Gew. % eines gemäß J. Pol. Sci., Pol. Chem. Ed. 17 (1979) S. 2317 - 2335 hergestellten Polyamid-Polyphenylensulfid-Blockcopolymeren als Haftvermittler, wurde aus einem Extruder mit Breitschlitzdüse bei 290°C extrudiert. Der Schmelzefilm wurde auf einer Doppelbandpresse bei 290°C und 5 bar kontinuierlich mit 2 Glasmatten (Syncomat, je 650 g/m$^2$) verpreßt. Nach dem Austrag aus der Kühlzone erhielt man eine glasfaserverstärkte Bahn von 3 mm Dicke, einem Flächengewicht von 4300 g/m$^2$ und einem Glasgehalt von 30 Gew.%. Der Schmelzindex der Mischung (290°C, 5 kg) und die Eigenschaften des Verbundes sind in Tabelle 1 zusammengestellt.

Beispiel 8

Analog zu Beispiel V 7 wurden glasfaserverstärkte Verbundbahnen aus Polyphenylensulfid, Polyxylylenadipamid und Haftvermittler hergestellt, wobei jedoch vor der Extrusion 2 Gew.% Bernsteinsäurediamid (BA), bezogen auf die Menge des Polyamids, zugesetzt wurden. Der Schmelzindex (290°C, 5 kg) nach der Extrusion sowie die Eigenschaften der Verbunde sind in Tabelle 1 zusammengestellt.

Vergleichsbeispiel V9

Eine Mischung aus 100 Gew. Teilen PP-Pulver, entsprechend Daplen[R]B von Petrochemie Danubia, 100 Gew. Teilen Polyamid 6-Pulver, entsprechend Ultramid[R]B4 von BASF und 2 Gew.Teilen eines mit 2 Gew. % Maleinsäureanhydrid gepfropften Polypropylens mit einem MFI von 500 g/10 min bei 230°C und 2,16 kg, entsprechend MPC QF 550 von Mitsui Petrochemical als Haftvermittler, wurde aus einem Extruder mit Breitschlitzdüse bei 280°C extrudiert. Der Schmelzefilm wurde auf einer Doppelbandpresse kontinuierlich zwischen 2 Glasmatten (Syncomat, je 650 g/m$^2$) in einer Heizzone mit 200°C und einer anschließenden Kühlzone mit 80°C, bei einem Druck von 5 bar verpreßt, wobei eine 1,3 m breite und 3,7 mm dicke glasfaserverstärkte Bahn mit einem Flächengewicht von 4300 g/m$^2$ und einem Glasgehalt von 30 Gew.% erhalten wurde. Der Schmelzindex der Mischung (280°C, 5 kg) und die Eigenschaften des Verbunden sind in Tabelle 1 zusammengestellt.

Beispiel 10

Analog zu Beispiel V 9 wurden glasfaserverstärkte Verbundbahnen aus Polypropylen, Polyamid und Haftvermittler hergestellt, wobei jedoch vor der Extrusion 2 Gew.% Bernsteinsäurediamid (BA), bezogen auf die Menge des Polyamids, zugesetzt wurden. Der Schmelzindex (280°C, 5 kg) nach der Extrusion sowie die Eigenschaften der Verbunde sind in Tabelle 1 zusammengestellt.

Vergleichsbeispiel V11

Polyamid 6, entsprechend Ultramid B 4 von BASF, wurde aus einem Extruder mit Breitschlitzdüse bei 280°C extrudiert. Der Schmelzefilm (3500 g/m$^2$) wurde auf einer Doppelbandpresse bei 280°C und 5 bar kontinuierlich mit 2 Glasmatten (Syncomat, je 750 g/m$^2$) verpreßt. Nach dem Austrag aus der Kühlzone erhielt man eine glasfaserverstärkte Bahn von 3,7 mm Dicke, einem Flächengewicht von 5000 g/m$^2$ und einem Glasgehalt von 30 Gew.%. Der Schmelzindex (280°C, 5 kg) und die Eigenschaften des Verbundes sind in Tabelle 1 zusammengestellt.

Beispiel 12

Analog zu Beispiel V 11 wurde eine glasfaserverstärkte Verbundbahn aus Polyamid hergestellt, wobei jedoch vor der Extrusion 2 Gew.% Bernsteinsäurediamid (BA), bezogen auf die Menge des Polyamids, zugesetzt wurden. Der Schmelzindex (280°C, 5 kg) nach der Extrusion sowie die Eigenschaften der Verbunde sind in Tabelle 1 zusammengestellt.

Beispiele 13 und 14

Ein Polymerblend aus 55 Gew.% Polyphenylenether (PPE) und 45 Gew.% Polyamid 6 (PA), entsprechend Ultranyl[(R)] KR 4510 von BASF, wurde mit 2 Gew.% Bernsteinsäurediamid (BA, Beispiel 13), bzw. mit 2 Gew.% Adipinsäurediamid, (AD, Beispiel 14), jeweils bezogen auf die Menge des Polyamids, vermischt und aus einem Extruder mit Breitschlitzdüse bei 290°C extrudiert. Der Schmelzefilm wurde auf einer Doppelbandpresse bei 250°C und 5 bar kontinuierlich mit 2 Glasmatten (Syncomat, je 650 g/m$^2$) verpreßt. Nach dem Austrag aus der Kühlzone erhielt man eine glasfaserverstärkte Bahn von 3,2 mm Dicke, einem Flächengewicht von 4300 g/m$^2$ und einem Glasgehalt von 30 Gew.%. Der Schmelzindex (280°C, 5 kg) der Mischung und die Eigenschaften des Verbundes sind in Tabelle 1 zusammengestellt.

## Tabelle 1

### Verbundwerkstoff mit 30 Gew.% Glasfaser

| Bei-spiel | Matrix | Säure-amid (Gew. %) | MFI (g/10 min) | Zug-festig keit (N/mm²) | Deh-nung (%) | Schlag-zähig-keit (kJ/m²) | Biege-E-Modul (N/mm²) | Wärme-formbe-ständig-keit (°C) | Wasser-auf-nahme (Gew.%) |
|---|---|---|---|---|---|---|---|---|---|
| V1 | PPS/PA6 | - | 200 | 90 | 2,0 | 55 | 6000 | 200 | 0,35 |
| 2 | PPS/PA6 | 2BA | 800 | 120 | 2,5 | 60 | 10000 | 200 | 0,35 |
| V3 | PEI/PA6 | - | 100 | 100 | 2,0 | 45 | 6000 | 200 | 0,25 |
| 4 | PEI/PA6 | 2BA | 770 | 150 | 2,5 | 55 | 6500 | 200 | 0,25 |
| V5 | PC/PA6 | - | 30 | 100 | 3,0 | 45 | 6300 | 180 | 0,4 |
| 6 | PC/PA6 | 2BA | 200 | 120 | 2,5 | 65 | 7000 | 180 | 0,4 |
| V7 | PPS/PA* | - | 300 | 150 | 2,0 | 50 | 7000 | 220 | 0,3 |
| 8 | PPS/PA* | 2BA | 900 | 170 | 2,5 | 50 | 10000 | 220 | 0,3 |
| V9 | PP/PA6 | - | 22 | 140 | 3,0 | 50 | 7100 | 160 | 0,4 |
| 10 | PP/PA6 | 2BA | 180 | 150 | 2,5 | 60 | 7400 | 160 | 0,4 |
| V11 | PA6 | - | 45 | 110 | 3,5 | 35 | 6500 | 200 | 1,1 |
| 12 | PA6 | 2BA | 500 | 120 | 2,3 | 45 | 7000 | 200 | 1,1 |
| 13 | PPE/PA6 | 2BA | 310 | 140 | 2,5 | 55 | 7500 | 190 | 0,5 |
| 14 | PPE/PA6 | 2AD | 245 | 120 | 2,0 | 65 | 7000 | 190 | 0,5 |

*aromatisches Polyamid

**Patentansprüche**
**Patentansprüche für folgende Vertragsstaaten : AT, BE, CH, DE, FR, GB, GR, IT, LI, LU, NL, SE**

1. Thermoplastischer faserverstärkter Verbundwerkstoff, erhältlich durch Imprägnieren von Verstärkungsfasern mit der Schmelze einer Mischung, die 10 bis 90 Gew.Teile Thermoplast, 90 bis 10 Gew.Teile Polyamid und gegebenenfalls 1 bis 10 Gew.Teile Haftvermittler enthält, wobei die Mischung zusätzlich 0,1 bis 10 Gew.%, bezogen auf die Menge des Polyamids, eines aliphatischen, gesättigten Dicarbonsäurediamids mit 3 bis 10 C-Atomen enthält.

2. Verbundwerkstoff nach Anspruch 1, dadurch gekennzeichnet, daß er eine Wärmeformbeständigkeit von mindestens 145 ° C, gemessen mit der Vicatnadel gemäß DIN 53460 aufweist.

**3.** Verbundwerkstoff nach Anspruch 1 oder 2, dadurch gekennzeichnet, daß die Mischung zur Imprägnierung der Verstärkungsfasern 0,5 bis 5 % Säureamid, bezogen auf die Menge des Polyamids, enthält.

**4.** Verbundwerkstoff nach einem der Ansprüche 1 bis 3, dadurch gekennzeichnet, daß die Mischung zur Imprägnierung der Verstärkungsfasern 40 bis 60 Gew.Teile Thermoplast und 60 bis 40 Gew.Teile Polyamid enthält.

**5.** Verbundwerkstoff nach einem der Ansprüche 1 bis 4, erhältlich durch Imprägnieren von Verstärkungsfasern mit der Mischung aus Thermoplast, Polyamid, Säureamid und gegebenenfalls Haftvermittler durch Heißpressen bei Temperaturen von 10 bis 200°C über dem Schmelzpunkt der Schmelze und bei Drücken von 1,2 bis 40 bar.

**6.** Verfahren zur Herstellung von thermoplastischen faserverstärkten Verbundwerkstoffen nach Anspruch 1, dadurch gekennzeichnet, daß eine Mischung aus 10 bis 90 Gew.Teilen Thermoplast, 90 bis 10 Gew. Teilen Polyamid und gegebenenfalls 1 bis 10 Gew. Teilen Haftvermittler, wobei die Mischung 0,1 bis 10 Gew. %, bezogen auf die Menge des Polyamids, eines aliphatischen, gesättigten Dicarbonsäurediamids mit 3 bis 10 C-Atomen enthält, aufgeschmolzen wird, und mit der Schmelze bei Temperaturen von 10 bis 200°C über dem Schmelzpunkt der Schmelze Verstärkungsfasern imprägniert werden.

**7.** Verfahren zur Herstellung von Verbundwerkstoffen nach Anspruch 6, dadurch gekennzeichnet, daß die Imprägnierung durch gemeinsames Verpressen der Verstärkungsfasern mit der Mischung aus Thermoplast, Polyamid, Säureamid und gegebenenfalls Haftvermittler bei Temperaturen von 10 bis 200°C über dem Schmelzpunkt der Schmelze und bei Drücken von 1,2 bis 40 bar erfolgt.

**8.** Verfahren zur Herstellung von Verbundwerkstoffen nach Anspruch 7, dadurch gekennzeichnet, daß die Mischung aus Thermoplast, Polyamid, Säureamid und gegebenenfalls Haftvermittler in Form eines vorgefertigten Films oder eines frisch extrudierten Schmelzefilms eingesetzt wird und gemeinsam mit den Verstärkungsfasern, die in Form einer Matte oder in Form von unidirektionalen Endlosfastersträngen vorliegen, einer kontinuierlichen Presse zugeführt werden.

**9.** Verwendung von Verbundwerkstoffen nach einem der Ansprüche 1 bis 5 als Ausgangsmaterial zur Herstellung von Formteilen durch Heißpressen.

**10.** Verwendung von Verbundwerkstoffen nach einem der Ansprüche 1 bis 5 als Ausgangsmaterial zur Herstellung von Granulaten.

**Patentansprüche für folgenden Vertragsstaat : ES**

**1.** Verfahren zur Herstellung von thermoplastischen faserverstärkten Verbundwerkstoffen, dadurch gekennzeichnet, daß eine Mischung aus 10 bis 90 Gew.Teilen Thermoplast, 90 bis 10 Gew. Teilen Polyamid und gegebenenfalls 1 bis 10 Gew. Teilen Haftvermittler, wobei die Mischung 0,1 bis 10 Gew. %, bezogen auf die Menge des Polyamids, eines aliphatischen, gesättigten Dicarbonsäurediamids mit 3 bis 10 C-Atomen enthält, aufgeschmolzen wird, und mit der Schmelze Verstärkungsfasern imprägniert werden.

**2.** Verfahren zur Herstellung von Verbundwerkstoffen nach Anspruch 1, dadurch gekennzeichnet, daß die Verbundwerkstoffe eine Wärmeformbeständigkeit von mindestens 145°C, gemessen mit der Vicatnadel gemäß DIN 53460 aufweisen.

**3.** Verfahren zur Herstellung von Verbundwerkstoffen nach Anspruch 1 oder 2, dadurch gekennzeichnet, daß die Mischung zur Imprägnierung der Verstärkungsfasern 0,5 bis 5 % Säureamid, bezogen auf die Menge des Polyamids, enthält.

**4.** Verfahren zur Herstellung von Verbundwerkstoffen nach einem der Ansprüche 1 bis 3, dadurch gekennzeichnet, daß die Mischung zur Imprägnierung der Verstärkungsfasern 40 bis 60 Gew.Teile Thermoplast und 60 bis 40 Gew.Teile Polyamid enthält.

5. Verfahren zur Herstellung von Verbundwerkstoffen nach einem der Ansprüche 1 bis 4, dadurch gekennzeichnet, daß die Imprägnierung durch gemeinsames Verpressen der Verstärkungsfasern mit der Mischung aus Thermoplast, Polyamid, Säureamid und gegebenenfalls Haftvermittler bei Temperaturen von 10 bis 200°C über dem Schmelzpunkt der Schmelze und bei Drücken von 1,2 bis 40 bar erfolgt.

6. Verfahren zur Herstellung von Verbundwerkstoffen nach Anspruch 5, dadurch gekennzeichnet, daß die Mischung aus Thermoplast, Polyamid, Säureamid und gegebenenfalls Haftvermittler in Form eines vorgefertigten Films oder eines frisch extrudierten Schmelzefilms eingesetzt wird und gemeinsam mit den Verstärkungsfasern, die in Form einer Matte oder in Form von unidirektionalen Endlosfasersträngen vorliegen, einer kontinuierlichen Presse zugeführt werden.

7. Verwendung von Verbundwerkstoffen nach einem der Ansprüche 1 bis 6 als Ausgangsmaterial zur Herstellung von Formteilen durch Heißpressen.

8. Verwendung von Verbundwerkstoffen nach einem der Ansprüche 1 bis 6 als Ausgangsmaterial zur Herstellung von Granulaten.

**Claims**

**Claims for the following Contracting States : AT, BE, CH, DE, FR, GB, GR, IT, LI, LU, NL, SE**

1. Thermoplastic fibre-reinforced composite material, obtainable by impregnating reinforcing fibres with the melt of a mixture containing 10 to 90 parts by weight of thermoplastic, 90 to 10 parts by weight of polyamide and, if appropriate, 1 to 10 parts by weight of adhesion promoter, the mixture additionally containing 0.1 to 10% by weight, based on the amount of polyamide, of an aliphatic, saturated dicarboxylic acid diamide having 3 to 10 C atoms.

2. Composite material according to Claim 1, characterised in that it has a heat distortion temperature of at least 145°C, measured with the Vicat needle according to DIN 53460.

3. Composite material according to Claim 1 or 2, characterised in that the mixture for impregnating the reinforcing fibres contains 0.5 to 5% of acid amide, based on the amount of polyamide.

4. Composite material according to one of Claims 1 to 3, characterised in that the mixture for impregnating the reinforcing fibres contains 40 to 60 parts by weight of thermoplastic and 60 to 40 parts by weight of polyamide.

5. Composite material according to one of Claims 1 to 4, obtainable by impregnating reinforcing fibres with the mixture of thermoplastic, polyamide, acid amide and, if appropriate, adhesion promoter by hot pressing at temperatures of 10 to 200°C above the melting point of the melt and at pressures of 1.2 to 40 bar.

6. Process for producing thermoplastic fibre-reinforced composite materials according to Claim 1, characterised in that a mixture of 10 to 90 parts by weight of thermoplastic, 90 to 10 parts by weight of polyamide and, if appropriate, 1 to 10 parts by weight of adhesion promoter, the mixture containing 0.1 to 10% by weight, based on the amount of polyamide, of an aliphatic, saturated dicarboxylic acid diamide having 3 to 10 C atoms, is melted and reinforcing fibres are impregnated with the melt at temperatures of 10 to 200°C above the melting point of the melt.

7. Process for producing composite materials according to Claim 6, characterised in that the impregnation is carried out by joint pressing of the reinforcing fibres with the mixture of thermoplastic, polyamide, acid amide and, if appropriate, adhesion promoter at temperatures of 10 to 200°C above the melting point of the melt and at pressures of 1.2 to 40 bar.

8. Process for producing composite materials according to Claim 7, characterised in that the mixture of thermoplastic, polyamide, acid amide and, if appropriate, adhesion promoter is used in the form of a prefabricated film or a freshly extruded melt film and is fed to a continuous press together with the reinforcing fibres, which exist in the form of a mat or in the form of unidirectional continuous fibre strands.

9. Use of composite materials according to one of Claims 1 to 5 as a starting material for producing mouldings by hot pressing.

10. Use of composite materials according to one of Claims 1 to 5 as a starting material for producing granules.

**Claims for the following Contracting State : ES**

1. Process for producing thermoplastic fibre-reinforced composite materials, characterised in that a mixture of 10 to 90 parts by weight of thermoplastic, 90 to 10 parts by weight of polyamide and, if appropriate, 1 to 10 parts by weight of adhesion promoter, the mixture containing 0.1 to 10% by weight, based on the amount of polyamide, of an aliphatic, saturated dicarboxylic acid diamide having 3 to 10 C atoms, is melted and reinforcing fibres are impregnated with the melt.

2. Process for producing composite materials according to Claim 1, characterised in that the composite materials have a heat distortion temperature of at least 145°C, measured with the Vicat needle according to DIN 53460.

3. Process for producing composite materials according to Claim 1 or 2, characterised in that the mixture for impregnating the reinforcing fibres contains 0.5 to 5% of acid amide, based on the amount of polyamide.

4. Process for producing composite materials according to one of Claims 1 to 3, characterised in that the mixture for impregnating the reinforcing fibres contains 40 to 60 parts by weight of thermoplastic and 60 to 40 parts by weight of polyamide.

5. Process for producing composite materials according to one of Claims 1 to 4, characterised in that the impregnation is carried out by joint pressing of the reinforcing fibres with the mixture of thermoplastic, polyamide, acid amide and, if appropriate, adhesion promoter at temperatures of 10 to 200°C above the melting point of the melt and at pressures of 1.2 to 40 bar.

6. Process for producing composite materials according to Claim 5, characterised in that the mixture of thermoplastic, polyamide, acid amide and, if appropriate, adhesion promoter is used in the form of a prefabricated film or a freshly extruded melt film is used and is fed to a continuous press together with the reinforcing fibres, which exist in the form of a mat or in the form of unidirectional continuous fibre strands.

7. Use of composite materials according to one of Claims 1 to 6 as a starting material for producing mouldings by hot pressing.

8. Use of composite materials according to one of Claims 1 to 6 as a starting material for producing granules.

**Revendications**
**Revendications pour les Etats contractants suivants : AT, BE, CH, DE, FR, GB, GR, IT, LI, LU, NL, SE**

1. Matériau composite thermoplastique renforcé par fibres, préparable par imprégnation des fibres de renfort par la masse fondue d'un mélange qui contient 10 à 90 parties en poids d'une matière thermoplastique, 90 à 10 parties en poids d'un polyamide et, éventuellement, 1 à 10 parties en poids d'un agent de fixation, où le mélange contient, de plus, 0,1 à 10% en poids, par rapport à la quantité de polyamide, d'un diamide aliphatique saturé de 3 à 10 atomes de carbone.

2. Matériau composite suivant la revendication 1, caractérisé en ce qu'il présente une température conventionnelle de déformation d'au moins 145°C, mesurée au moyen d'une aiguille Vicat conforme DIN 53460.

3. Matériau composite suivant la revendication 1 ou 2, caractérise en ce que le mélange d'imprégnation des fibres de renfort contient de 0,5 à 5% d'un amide, par rapport à la quantité de polyamide.

4. Matériau composite suivant l'une quelconque des revendications 1 à 3, caractérisé en ce que le mélange d'imprégnation des fibres de renfort contient 40 à 60 parties en poids de matière thermoplastique et 60 à 40 parties en poids de polyamide.

5. Matériau composite suivant l'une quelconque des revendications 1 à 4, préparable par imprégnation des fibres de renfort avec le mélange de matière thermoplastique, de polyamide, d'amide et, éventuellement, d'agent de fixation, par moulage par compression à une température de 10 à 200°C au-dessus du point de fusion de la masse fondue et par estampage de 1,2 à 40 bars.

6. Procédé de préparation de matériaux composites thermoplastiques renforcés par fibres suivant la revendication 1, caractérisé en ce qu'un mélange de 10 à 90 parties en poids de matière thermoplastique, 90 a 10 parties en poids de polyamide et, éventuellement, 1 à 10 parties en poids d'agent de fixation, où le mélange contient, de plus, 0,1 à 10% en poids, par rapport à la quantité de polyamide, d'un diamide aliphatique saturé de 3 à 10 atomes de carbone, est fondu, et les fibres de renfort sont imprégnées par la masse fondue à une température de 10 à 200°C au-dessus du point de fusion de la masse fondue.

7. Procédé de préparation de matériaux composites suivant la revendication 6, caractérisé en ce que l'imprégnation résulte d'un moulage par compression classique des fibres de renfort avec le mélange de matière thermoplastique, de polyamide, d'amide et, éventuellement, d'agent de fixation à une température de 10 à 200°C au-dessus du point de fusion de la masse fondue et par estampage de 1,2 à 40 bars.

8. Procédé de préparation de matériaux composites suivant la revendication 7, caractérisé en ce que le mélange de matière thermoplastique, de polyamide, d'amide et, éventuellement, d'agent de fixation est mis sous forme d'une pellicule préfabriquée ou d'une pellicule fondue fraîchement extrudée, et est amené, de manière classique, pour une presse en continu avec la fibre de renfort, qui se présente sous la forme d'un mât ou sous la forme d'un monofilament unidirectionnel.

9. Utilisation de matériaux composites suivant l'une quelconque des revendications 1 à 5, comme matière première à la préparation de pièces moulées par moulage par compression.

10. Utilisation de matériaux composites suivant l'une quelconque des revendications 1 à 5, comme matière première à la préparation de granulés.

**Revendications pour l'Etat contractant suivant : ES**

1. Procédé de préparation de matériaux composites thermoplastiques renforcés par fibres, caractérisé en ce qu'un mélange de 10 à 90 parties en poids d'une matière thermoplastique, 90 a 10 parties en poids d'un polyamide et, éventuellement, 1 à 10 parties en poids d'un agent de fixation, où le mélange contient, de plus, 0,1 à 10% en poids, par rapport à la quantité de polyamide, d'un diamide aliphatique saturé de 3 à 10 atomes de carbone, est fondu, et les fibres de renfort sont imprégnées par la masse fondue.

2. Procédé de préparation de matériaux composites suivant la revendication 1, caractérisé en ce que les matériaux composites présentent une température conventionnelle de déformation d'au moins 145°C, mesurée au moyen d'une aiguille Vicat conforme DIN 53460.

3. Procédé de préparation de matériaux composites suivant la revendication 1 ou 2, caractérisé en ce que le mélange d'imprégnation des fibres de renfort contient de 0,5 à 5% d'un amide, par rapport à la quantité de polyamide.

4. Procédé de préparation de matériaux composites suivant l'une quelconque des revendications 1 à 3, caractérisé en ce que le mélange d'imprégnation des fibres de renfort contient 40 à 60 parties en poids de matière thermoplastique et 60 à 40 parties en poids de polyamide.

**5.** Procédé de préparation de matériaux composites suivant l'une quelconque des revendications 1 à 4, caractérisé en ce que l'imprégnation des fibres de renfort avec le mélange de matière thermoplastique, de polyamide, d'amide et, éventuellement, d'agent de fixation est réalisée par moulage par compression à une température de 10 à 200°C au-dessus du point de fusion de la masse fondue et par estampage de 1,2 à 40 bars.

**6.** Procédé de préparation de matériaux composites suivant la revendication 5, caractérisé en ce que le mélange de matière thermoplastique, de polyamide, d'amide et, éventuellement, d'agent de fixation est mis sous forme d'une pellicule préfabriquée ou d'une pellicule fondue fraîchement extrudée, et est amené, de manière classique, pour une presse en continu avec la fibre de renfort, qui se présente sous la forme d'un mât ou sous la forme d'un monofilament unidirectionnel.

**7.** Utilisation de matériaux composites suivant l'une quelconque des revendications 1 à 6, comme matière première à la préparation de pièces moulées par moulage par compression.

**8.** Utilisation de matériaux composites suivant l'une quelconque des revendications 1 à 6, comme matière première à la préparation de granulés.